**Europäisches Patentamt**

**European Patent Office**

**Office européen des brevets**

(19)

(11) Numéro de publication : **0 404 681 B1**

(12) **FASCICULE DE BREVET EUROPEEN**

(45) Date de publication du fascicule du brevet :
26.05.93 Bulletin 93/21

(51) Int. Cl.⁵ : **G01T 7/06**

(21) Numéro de dépôt : **90401760.5**

(22) Date de dépôt : **21.06.90**

(54) **Capteur électrostatique de particules d'aérosol.**

(30) Priorité : 23.06.89 FR 8908400
27.02.90 FR 9002413

(43) Date de publication de la demande :
27.12.90 Bulletin 90/52

(45) Mention de la délivrance du brevet :
26.05.93 Bulletin 93/21

(84) Etats contractants désignés :
**DE GB IT NL**

(56) Documents cités :
DE-A- 3 829 079
GB-A- 1 533 113

(56) Documents cités :
**IEEE NUCLEAR SCIENCE, vol. NS-19, no. 1,
février 1972, pages 64-75; O.G. RAABE:
"Instruments and methods for characterizing
radioactive aerosols"**

(73) Titulaire : **COMMISSARIAT A L'ENERGIE
ATOMIQUE**
**31/33, rue de la Fédération**
**F-75015 Paris Cédex 15 (FR)**

(72) Inventeur : **Pourprix, Michel**
**7 allée des Maraîchers**
**F-91310 Montlhery (FR)**

(74) Mandataire : **Mongrédien, André et al**
**c/o BREVATOME 25, rue de Ponthieu**
**F-75008 Paris (FR)**

## Description

La présente invention s'applique d'une façon générale au domaine de la capture électrostatique des particules d'aérosol en vue de les étudier, notamment sous l'angle de leur mobilité ou de leur charge électrique ainsi que de les collecter en vue de les soumettre à des systèmes d'analyse.

D'une manière générale on rappellera que l'on désigne sous le terme d'aérosol des suspensions de particules de matières solides ou liquides dans une phase gazeuse, les tailles desdites particules pouvant s'échelonner selon un spectre très large ; les plus fines correspondent aux agrégats moléculaires ayant quelques dizaines d'Angströms, alors que les plus grosses, qui proviennent généralement d'actions mécaniques, peuvent atteindre des dimensions de la centaine de micromètres. Les microorganismes, virus, bactéries, ou les pollens sont également considérés comme des particules d'aérosol et ont, lorsqu'ils sont en suspension dans un gaz, un comportement identique à celui des autres types de particules inertes. On rappellera encore qu'une catégorie non négligeable d'aérosol est constituée par les aérosols radioactifs qui peuvent avoir pour origine certains gaz radioactifs, comme par exemple les descendants du radon ou des particules provenant de la dispersion dans l'atmosphère de produits pulvérulents issus de l'industrie nucléaire.

Il existe de nombreuses raisons, indépendamment de l'étude scientifique des phénomènes, qui rendent l'étude, la détection et la mesure des aérosols particulièrement intéressantes. On peut citer notamment leur action sur la qualité de l'environnement dans le milieu naturel, leur action sur les êtres vivants et sur l'homme en particulier lorsqu'ils sont inhalés par voies respiratoires, ainsi que la contamination qu'ils peuvent produire sur certains produits fabriqués, notamment dans les secteurs agroalimentaires, pharmaceutiques et maintenant dans les laboratoires ou usines de fabrication de composants semiconducteurs effectués dans des atmosphères de très haute pureté, connues également sous le nom de salles blanches.

L'un des moyens les plus fréquemment utilisés pour détecter et mesurer les aérosols repose sur le fait qu'ils sont pratiquement tous porteurs de charges électriques, égales à la charge électrique unitaire ou multiples de celle-ci. Il n'est pas inutile pour la compréhension de la suite du présent texte de rappeler que, en général, dans un volume déterminé d'atmosphère, la somme globale des charges électriques positives et négatives portées par les particules d'un aérosol qui s'y trouve est nulle. Ceci signifie qu'à chaque instant, l'échantillon contenu dans cette partie d'atmosphère comporte autant de charges positives que de charges négatives, en général selon une distribution gaussienne centrée sur la charge nulle et décroissante en fonction du nombre de charges élémentaires.

Tout naturellement par conséquent, on a déjà utilisé fréquemment pour la détection de la présence, le prélèvement et la mesure des aérosols, des champs électrostatiques agissant sur les charges électriques qu'ils portent. A cet effet, on définit couramment une notion fondamentale dans ce domaine qui est celle de la mobilité électrique d'une particule chargée placée dans un champ électrostatique. Cette grandeur, qui définit la plus ou moins grande aptitude d'une telle particule à subir une déviation sous l'effet de ce champ, peut se traduire par l'égalité suivante :

$$\vec{W} = \vec{Z}\vec{E},$$

égalité vectorielle dans laquelle $\vec{W}$ est la vitesse de dérive acquise par la particule sous l'influence du champ électrique E à laquelle elle est soumise. Le coefficient Z de proportionnalité entre les deux grandeurs précédentes est précisément la mobilité électrique en question. Comme cette mobilité électrique est, ce qui est d'ailleurs conforme à l'intuition, d'une part proportionnelle à la charge électrique de la particule et inversement proportionnelle à sa granulométrie, on conçoit la possibilité de réaliser de véritables spectromètres de mobilité électrique consistant à soumettre des particules d'aérosols entraînées dans un courant gazeux à l'action d'un champ électrique existant entre deux électrodes. Sous l'effet du champ, les particules chargées de ces aérosols se déposent, suivant leur signe, sur l'une de ces électrodes et l'abscisse de leur dépôt par rapport à la direction du courant gazeux est caractéristique de leur mobilité en ce sens que plus cette mobilité électrique est élevée, plus l'abscisse de leur dépôt est proche de l'origine du courant gazeux qui les véhicule. On obtient ainsi un étalement dans l'espace des particules collectées, qui en réalise une spectrométrie en fonction de leur mobilité électrique.

Jusqu'à présent, des appareils de ce genre ont fonctionné avec des structures ayant des formes d'écoulement à géométrie cylindrique ou parallélèpipédique comme dans GB-A-1533 113.

Ces structures existant à ce jour présentent deux défauts sérieux :

- d'abord une difficulté de réalisation certaine en ce qui concerne notamment leur fabrication et, lorsque l'électrode de collection est cylindrique, un examen relativement délicat des particules qui s'y sont précipitées ;
- un autre inconvénient réside dans le fait que pour obtenir un spectromètre de mobilité électrique de bonne qualité, l'écoulement du flux gazeux véhiculant les particules d'aérosols doit être de haute qualité en ce qui concerne d'une part ses caractéristiques d'écoulement laminaire et d'autre part ses caractéristiques d'écoulement stable. Ce n'est pas le cas en général dans les structures cylindriques et/ou parallélépipédiques utilisées jusqu'à ce jour.

La présente invention a pour objet au contraire un capteur électrostatique de particules d'aérosol dont la fabrication et l'exploitation par des appareils de mesure ultérieurs est beaucoup plus simple que dans les structures existantes précédemment rappelées et qui offre en outre le très grand avantage de permettre un écoulement du gaz porteur sous forme d'un flux laminaire parfait et stable.

Ce capteur électrostatique de particules d'aérosol contenues dans une atmosphère à examiner, se caratérise en ce qu'il comprend deux disques conducteurs coaxiaux, espacés et parallèles, entre lesquels on établit un champ électrique en les portant à des potentiels différents, l'espace compris entre les deux disques communiquant sur toute sa périphérie avec l'atmosphère à examiner, une aspiration centrale étant prévue dans cet espace pour y faire circuler, à partir de la périphérie des disques, une partie de cette atmosphère sous forme d'un écoulement laminaire centripète et stable.

La caractéristique essentielle et nouvelle du capteur électrostatique selon l'invention est donc de travailler avec deux électrodes en forme de disque et un écoulement de l'atmosphère à examiner entre les deux disques sous forme d'un écoulement laminaire centripète et stable depuis la périphérie jusqu'au centre de l'appareil où l'écoulement est aspiré. On réalise ainsi d'un seul coup un appareil facile à fabriquer car des disques conducteurs sont très simples à réaliser ; de plus, les électrodes de fixation des particules se prêtent très bien à l'analyse, par exemple par un spectromètre, puisque les particules sont réparties en zones concentriques dont la mobilité électrique décroît de la périphérie au centre. De plus, la structure ayant une symétrie circulaire, autorise un écoulement laminaire parfaitement stable et contrôlé.

Selon un mode de mise en oeuvre très intéressant de l'invention, le capteur électrostatique est caractérisé en ce que le débit de l'écoulement de l'atmosphère à examiner est la résultante différentielle du débit d'aspiration centrale et d'un débit d'injection périphérique de gaz filtré, ce dernier étant réglé à une valeur inférieure à celle du débit d'aspiration. Ce mode de mise en oeuvre est spécialement bien adapté à une détermination précise de la valeur du débit de l'atmosphère à examiner puisque celle-ci résulte par définition de la différence parfaitement contrôlée entre le débit de gaz aspiré et le débit de gaz filtré injecté.

Selon l'invention également, il est avantageux de constituer le capteur électrostatique à l'aide d'un boîtier cylindrique circulaire de forme aplatie possédant deux conduits axiaux, l'un d'injection de gaz à la partie inférieure du boîtier et l'autre d'extraction d'air, à la partie supérieure de ce boîtier, ce boîtier comportant à sa périphérie supérieure une fente annulaire pour l'entrée de l'atmosphère à analyser et, en son centre, un disque épais massif dont la face supérieure supporte l'un des deux disques conducteurs, le second disque conducteur étant constitué par le couvercle supérieur du boîtier, le débit de gaz d'injection contournant le disque épais après passage au travers d'un filtre de purification et de répartition uniforme de son écoulement.

Selon l'invention et en fonction des résultats recherchés, on dispose, pour appliquer le capteur électrostatique à la réalisation d'un spectromètre de mobilité électrique de particules d'aérosols, des différents paramètres que sont l'intensité du champ électrique entre les deux disques et le débit d'écoulement laminaire radial de l'échantillon d'atmosphère à examiner. Selon la valeur imposée à ces différents paramètres, on obtient une fixation de tout ou partie des particules dispersées sous forme de zones annulaires concentriques sur les disques constituant les deux électrodes, le spectre de mobilité pouvant être déduit par un calcul ou un traitement informatique à partir de l'examen de l'emplacement des différentes zones annulaires précédentes, de leur densité ainsi que de la granulométrie des particules.

Bien entendu et comme dans les capteurs électrostatiques de l'art antérieur, il est intéressant, si l'on veut être certain de capter l'intégralité des particules constituant un aérosol déterminé, de les soumettre, lors de leur entrée dans l'appareil, à des moyens de fixation sur ces particules de charges électriques qui soient toutes d'un même signe. Ceci peut être réalisé de différentes façons et notammenet :

- par disposition à l'entrée du débit gazeux d'une chambre annulaire contenant une source radioactive ionisante associée à une grille de polarisation pour trier les charges d'un signe donné ;
- soit, d'une chambre annulaire munie de micropointes chargées pour provoquer l'ionisation du gaz par effet couronne.

Dans un mode particulier de mise en oeuvre, on peut envisager que l'un des disques collecteurs lui-même soit réalisé en un matériau émetteur d'un rayonnement ionisant.

Si d'autre part, on souhaite dans un cas particulier, collecter et analyser même les particules d'aérosols neutres, il est possible d'adjoindre au dispositif d'extraction de gaz un filtre statique qui retiendra ces particules neutres.

Un mode de réalisation parfois intéressant du capteur électrostatique, objet de l'invention, consiste à disposer dans le boîtier qui le constitue, un certain nombre d'électrodes périphériques sectorielles munies chacune d'une alimentation électrique. On peut ainsi les porter à un potentiel suffisant pour piéger toutes les particules entrant dans le secteur correspondant et permettre par conséquent un fonctionnement du capteur par secteurs séquentiels.

Une autre application du capteur électrostatique objet de l'invention réside dans la réalisation d'un sélecteur de mobilité électrique de particules d'un aérosol, caractérisé en ce que l'un au moins des deux disques conducteurs coaxiaux est muni d'une fente annulaire centrée sur l'axe commun aux deux disques, en liaison avec des moyens d'aspiration, au travers de cette fente, des particules qui se seraient normalement déposées sur le disque à l'endroit de cette fente si elle n'existait pas.

Selon une variante de mise en oeuvre de ce sélecteur de mobilité, les moyens d'aspiration précédents consistent en un boîtier cylindrique, accolé à l'un des disques et renfermant la fente, et muni d'une tubulure d'aspiration pour permettre l'extraction sélective des particules ayant la mobilité électrique correspondant au rayon de la fente.

Une autre application du capteur électrostatique selon l'invention réside dans la réalisation d'un appareil d'obtention d'étalon de dépôt surfacique homogène de particules sur un substrat en forme de disque.

Cet appareil se caractérise en ce qu'on alimente le capteur électrostatique dont le substrat constitue l'un des disques conducteurs, à l'aide d'un flux particules d'aérosol ayant toutes en commun la même valeur pour deux sur trois des grandeurs que sont la mobilité électrique, la charge et la dimension, et en ce que l'on fait varier la différence de potentiel V entre les disques du capteur en fonction du temps pendant le dépôt selon la loi :

$$V = \frac{2h}{Z\left(\dfrac{\pi r_A^2}{Q} - \dfrac{N}{S}t\right)}$$

formule dans laquelle :
- h est la demi-distance entre les plaques;
- Z est la mobilité électrique commune aux particules;
- $r_A$ est la distance du point d'injection de l'aérosol par rapport à l'axe du capteur;
- Q est le débit d'extraction de la phase gazeuse hors du capteur;
- N est la concentration des particules dans le débit d'extraction Q, lorsque V = 0
- S est la densité surfacique des particules que l'on souhaite obtenir sur le disque de collection;
- t est le temps.

Une autre application du capteur électrostatique objet de l'invention réside dans la réalisation d'un capteur électrostatique à collection totale, apte à sélectionner tous les aérosols ayant une granulométrie inférieure à un seuil donné, caractérisé en ce qu'il comporte, sur le trajet d'introduction de la phase gazeuse contenant les aérosols, une fente annulaire calibrée pour réaliser, pour un débit d'extraction approprié la séparation inertielle des particules de granulométrie inférieure au seuil et le dépôt de ces particules sur un disque de collection.

De toute façon, l'invention sera mieux comprise à la lecture qui suit de différents exemples de mise en oeuvre et de réalisations, description qui sera faite à titre illustratif et non limitatif, en se référant aux figures 1 à 11 suivantes, sur lesquelles :
- la fig. 1 représente en coupe selon l'axe un capteur électrostatique conforme à l'invention dans son mode de réalisation le plus général ;
- la fig. 2 montre en vue de dessus, l'état de dispersion des particules d'un aérosol, après fixation sur l'électrode collectrice de la structure de la figure 1 ;
- la fig. 3 montre une application intéressante possible du capteur objet de l'invention dans laquelle l'électrode collectrice et son support sont constitués d'une boîte de Pétri, utilisée en biologie pour recueillir des aérosols bactériens ;
- la fig. 4 représente un mode de mise en oeuvre du capteur électrostatique, objet de l'invention, permettant, lorsqu'on le souhaite, la collection simultanée des particules chargées positivement et négativement d'un même aérosol ;
- la fig. 5 montre un mode de mise en oeuvre particulier du capteur de la fig. 1, apte à fonctionner par secteurs séquentiels successifs ;
- la fig. 6 montre un mode de mise en oeuvre du capteur de la fig. 1 assorti de moyens de charge des particules d'aérosols analysées avant leur entrée dans l'appareil ;
- la fig. 7 montre enfin un mode de réalisation du capteur électrostatique, objet de l'invention, dans lequel l'un des deux disques conducteurs servant d'électrode est lui-même émetteur de particules ionisantes.
- la figure 8 représente le principe schématique de réalisation d'un sélecteur de mobilité électrique de particules d'un aérosol conforme à l'invention ;
- la figure 9 est un schéma permettant d'expliquer la dispersion des dépôts de particules sur la plaque collectrice d'un capteur électrostatique ;
- la figure 10 est un schéma simplifié d'une installation de réalisation d'un appareil d'obtention de dépôt surfacique étalon de particules sur un substrat ;
- la figure 11 montre un exemple schématique de mise en oeuvre d'un capteur électrostatique à collection totale conforme à l'invention.

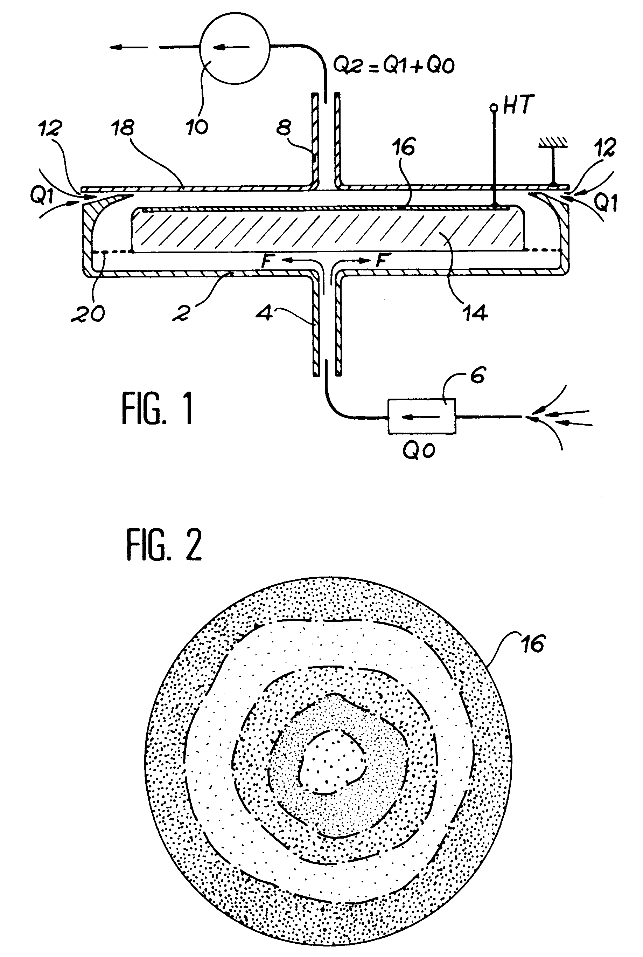

Sur la figure 1, on a représenté le mode de mise en oeuvre le plus général et le plus simple du capteur électrostatique d'aérosol, objet de l'invention. Pour l'essentiel, ce capteur comprend, dans un boîtier cylindrique circulaire de forme aplatie 2, équipé selon son axe central d'une entrée 4 pour le débit d'injection $Q_o$ d'air atmosphérique d'entraînement sous l'effet d'une pompe 6 ; selon son même axe mais à la partie supérieure, une canalisation de sortie 8 de l'atmosphère aspirée sous l'effet de la pompe d'aspiration 10. A la partie supérieure du boîtier 2 se trouve une fente annulaire 12 destinée à la pénétration de l'atmosphère à examiner sous l'angle de son contenu en particules d'aérosol. Le débit Q1 de prélèvement de l'air à examiner pour le faire circuler dans le boîtier 2, résulte de la différence entre le débit d'aspiration d'air Q2 sous l'effet de la pompe 10 et du débit d'injection $Q_o$ à l'entrée sous l'effet de la pompe 6.

A l'intérieur du boîtier 2 se trouve un disque épais massif 14, conducteur ou non de l'électricité, à la surface supérieure duquel repose l'un des deux disques conducteurs coaxiaux 16 constituant, avec la partie supérieure 18 du boîtier 2, les deux disques conducteurs coaxiaux caractéristiques de l'invention. Le disque supérieur 18 est porté à la masse alors que le disque inférieur 16 est porté à une haute tension positive ou négative par rapport à cette même masse. L'air atmosphérique prélevé par la pompe 6 et injecté dans la canalisation 4, pénètre dans la boîte 2 par la partie inférieure et s'y répartit selon une symétrie de révolution symbolisée par les flèches F pour traverser un filtre annulaire 20 qui le purifie complètement en éliminant toutes les particules en suspension qu'il peut contenir et en régularise l'écoulement. Cet air une fois filtré contourne la partie supérieure du disque épais 14 et entraîne le débit Q1 d'atmosphère à examiner selon un écoulement laminaire stable et centripète dans l'espace situé entre les deux disques conducteurs coaxiaux 16 et 18. Cet air est ensuite aspiré au centre du dispositif par la canalisation 8 sous l'effet de la pompe 10. Après un certain temps de fonctionnement nécessaire à la capture électrostatique sur les disques 16 et 18 des particules d'aérosol contenues dans le débit d'atmosphère prélevée au travers de l'ouverture 12, on peut ouvrir l'appareil et observer le disque 16 qui présente un aspect représenté sur la fig. 2 où l'on voit schématisées, par des points plus ou moins resserrés, les différentes zones annulaires concentriques de fixation, dispersées selon les rayons du disque 16, des particules d'aérosol fixées à des distances du centre du disque 16, en fonction de leur mobilité électrique, fonction de leur granulométrie et de leur charge électrique.

Dans l'appareil de la fig. 1, le disque 16 ou support de collection peut être d'une manière générale un disque métallique quelconque sur lequel on applique la haute tension, mais ce peut être également dans un cas particulièrement intéressant d'application, une tranche de silicium telle qu'on les utilise dans les salles blanches de l'industrie microélectronique. L'examen détaillé de la répartition et de la granulométrie des différentes particules sur le disque 16 comme on les voit sur la fig. 2, permet à l'aide d'un analyseur de dépôt surfacique et d'un traitement informatique à la portée de l'homme de métier, de déterminer à volonté, l'état de charge des différentes particules en suspension dans l'atmosphère examinée. Cette caractéristique est particulièrement intéressante pour les salles propres de l'industrie microélectronique où l'on sait parfaitement que cet état de charge des particules conditionne directement leur plus ou moins grande aptitude à se fixer sur les tranches de silicium utilisées comme substrat en microélectronique.

De plus, le fait d'utiliser une tranche de silicium comme support de collection 16 offre de multiples avantages, tels que, par exemple, la possibilité d'utiliser au démarrage un support de collection 16 dont le niveau de contamination surfacique est garanti extrêmement bas par le fournisseur par exemple avec moins de cinq particules de granulométrie supérieure à 0,5 micromètre sur l'ensemble de la surface.

Par ailleurs, des systèmes d'analyse extrêmement performants, qui sont apparus récemment sur le marché, permettent de déterminer la dimension des particules déposées sur une telle tranche de silicium avec grande précision entre 0,1 et 10 micromètres, ainsi que leur nombre dans chaque classe granulométrique.

A partir de la connaissance ainsi acquise du nombre et de la distribution granulométrique des particules d'aérosol déposées sur une surface annulaire comprise entre des rayons r et r + r, la connaissance de la mobilité électrique liée directement à l'emplacement d'impact des particules, permet de déduire le spectre de leur distribution de charges électriques. Cette grandeur est particulièrement intéressante pour la prévention de la pollution atmosphérique dans les salles blanches de l'industrie microélectronique.

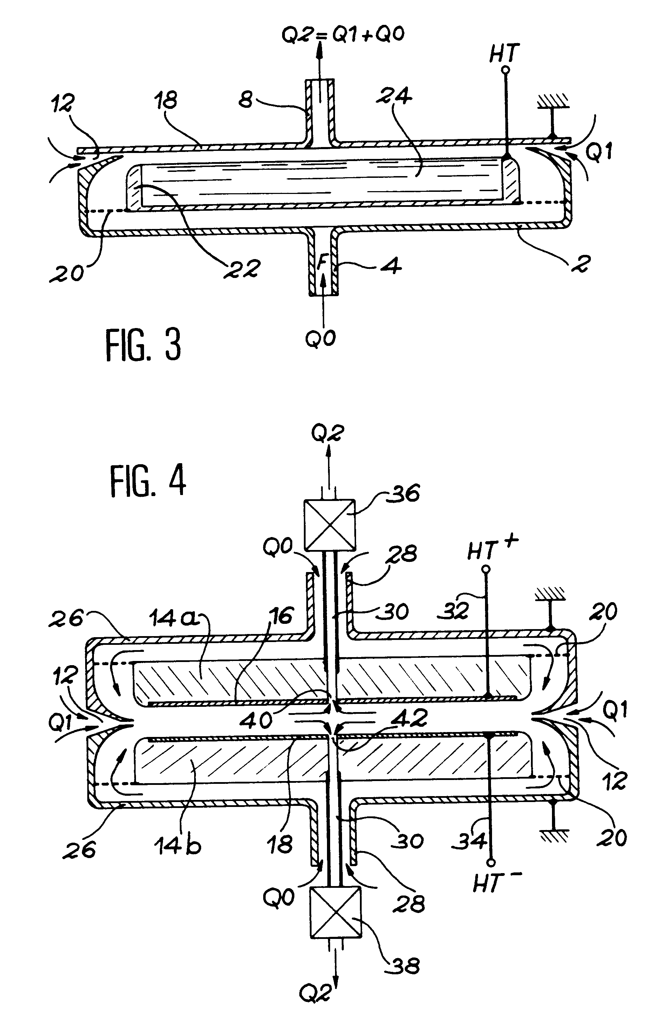

Dans le mode de mise en oeuvre de la figure 3 du capteur électrostatique objet de l'invention, on a représenté une application spécialement orientée vers des préoccupations biologiques consistant à identifier le spectre des bactéries contenues dans un échantillon d'atmosphère à analyser. A cet effet, le dispositif de la figure 3 sur lequel on reconnaît les mêmes éléments que sur la figure 1 portant les mêmes nombres de référence, comporte simplement, aux lieu et place du disque épais massif 14 une boîte de Pétri 22 remplie d'un milieu gélatineux de culture 24 électriquement conducteur. Lors du fonctionnement du capteur selon le même principe que celui décrit en se référant à la figure 1, les bactéries contenues dans l'atmosphère prélevées par l'ouverture annulaire 12 à analyser se déposent à la surface de la gélatine 24 où elles se fixent et où l'on peut par conséquent ultérieurement les mettre en évidence et les examiner, par exemple à l'oeil nu ou avec un analyseur d'image, après développement de la culture ainsi ensemencée dans un lieu approprié en température. On obtient ainsi facilement la mobilité électrique des bactéries contenues dans l'air prélevé.

Dans cet exemple, comme dans l'exemple de la figure 1, le filtre 20 situé sur le trajet de l'air d'entraînement injecté dans la pompe 6, joue le double rôle, d'une part de retenir les particules d'aérosol contenues dans l'air d'entraînement de façon à ce que celui-ci pénètre dans un état parfaitement pur dans l'espace compris entre les deux disques 16 et 18 et, d'autre part, d'homogénéiser les filets gazeux en participant ainsi aux conditions d'élaboration d'un écoulement centripète laminaire et parfaitement stable.

Bien entendu, les particules collectées dans le dispositif de la figure 1 ou les bactéries fixées dans celui de la figure 3, correspondent à celles qui portent des charges électriques de signe opposé à celui de la polarisation de l'électrode 16 de la figure 1 ou de la boîte de Pétri 22 de la figure 3. On peut donc, en changeant le signe de cette polarisation à haute tension, collecter ainsi à volonté des particules et/ou des bactéries comportant des charges électriques positives ou négatives.

Dans l'exemple de la figure 3, comme dans l'exemple de la figure 1, l'expérimentateur dispose des deux paramètres que sont les débits $Q_o$ et $Q2$ d'une part et la valeur de la haute tension appliquée au conducteur 16 ou à la boîte de Pétri 22 pour choisir le domaine du spectre des particules ou des bactéries qu'il désire fixer pour les étudier ultérieurement.

La figure 4 représente un mode de mise en oeuvre particulier du capteur électrostatique destiné à la collection des particules d'aérosol aussi bien chargées positivement que chargées négativement. Ce mode de mise en oeuvre comporte essentiellement un boîtier cylindrique circulaire 26 possédant dans son plan diamétral de symétrie l'ouverture périphérique annulaire 12 par laquelle est aspiré le débit Q1 d'atmosphère à analyser. Selon son axe de symétrie circulaire, le boîtier cylindrique 26 comporte à la partie supérieure, comme à la partie inférieure, deux conduits concentriques à savoir un conduit 28 extérieur destiné à l'injection du débit $Q_o$ et à la partie intérieure un deuxième conduit concentrique 30 destiné à l'aspiration du débit Q2 sous l'effet des pompes non représentées. Dans son mode de mise en oeuvre, les deux disques conducteurs 16 et 18 destinés à la collection des particules chargées sont situés face à face et placés symétriquement de part et d'autre du plan diamétral de symétrie de la boite 26. Ils sont portés comme dans l'exemple de la figure 1, par des disques épais massifs 14a et 14b. Le boîtier 26 est mis à la masse et chacun des disques conducteurs 16 et 18 est porté par un conducteur tel que 32 pour le disque 16 et 34 pour le disque 18 respectivement à une haute tension positive et négative symétrique par rapport à la masse de façon à collecter sur le disque conducteur 16 des particules d'aérosol chargées négativement et, sur le disque conducteur 18, les particules d'aérosol chargées positivement.

Si en outre, on souhaite pour des raisons particulières compléter la collection des particules chargées par celle des particules neutres, on place alors comme représenté sur la figure 4, deux filtres mécaniques passifs 36 et 38 sur les sorties d'aspiration des deux conduits 30.

L'aspiration du débit radial centripète et stable à partir des ouvertures annulaires périphériques 12 a lieu au travers des orifices 40 et 42, percés respectivement au point central des disques conducteurs 16 et 18 et par lesquels les filets gazeux de l'écoulement laminaire radial s'échappent vers l'extérieur.

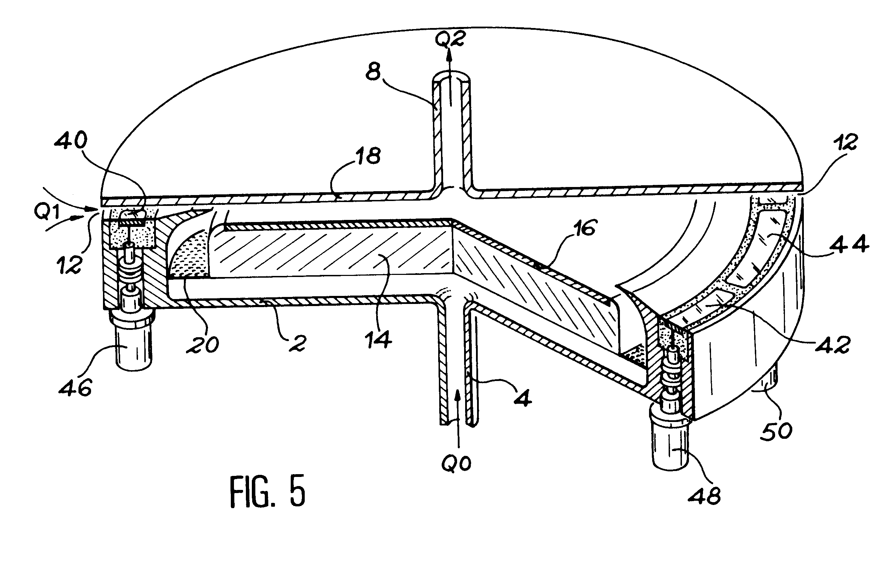

La figure 5 montre un mode de réalisation perfectionné du capteur électrostatique selon la figure 1 dans lequel la partie périphérique du boîtier 2 est munie d'électrodes planes telles que 40, 42 et 44, reliées à des sources de haute tension 46, 48 et 50 permettant ainsi de mettre sous tension à volonté un nombre quelconque de ces électrodes. Comme celles-ci ont une forme sectorielle sur la périphérie et que l'écoulement est radial et centripète, il suffit pour bloquer le fonctionnement d'un secteur correspondant à une électrode donnée, de mettre celle-ci sous une tension suffisante pour arrêter, dès l'entrée 12, l'ensemble des particules chargées de signe opposé à celui de la polarité choisie pour ladite électrode.

En d'autres termes, chacune des électrodes sectorielles 40, 42 et 44 etc... fonctionne comme un piège électrostatique. Si elles sont toutes alimentées, elles arrêtent toutes les particules dont aucune ne sera par conséquent collectée sur le disque de collection 16. Si au contraire, l'une quelconque des électrodes 40, 42, 44 etc n'est pas alimentée, c'est-à-dire est laissée au potentiel de la masse, le secteur angulaire correspondant laissera passer les particules chargées vers le secteur correspondant de la plaque 16. On peut donc réaliser ainsi des dépôts sur ce même disque support 16, secteur après secteur, selon une séquence préétablie. Ceci peut être très utile pour suivre dans le temps l'évolution de la contamination dans une ambiance particulière, en déclenchant au fur et à mesure le fonctionnement du capteur selon des secteurs radiaux juxtaposés.

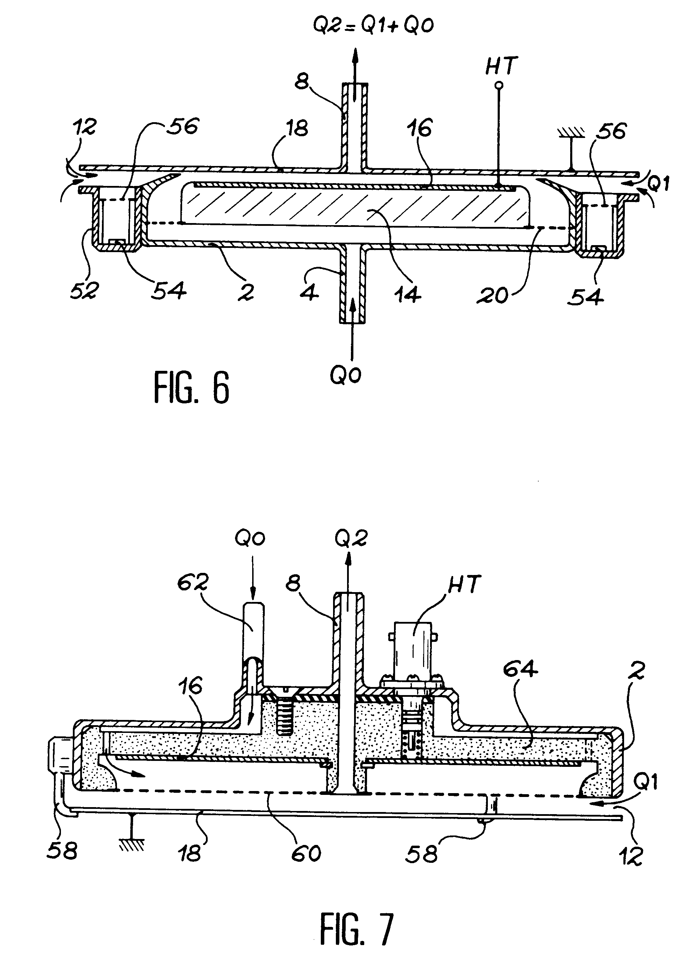

On décrira maintenant l'exemple de la figure 6 qui est un perfectionnement du capteur électrostatique de la figure 1 agencé de façon à permettre la collecte de la totalité des particules d'aérosol contenues dans un échantillon atmosphérique à examiner. A cet effet, on charge d'abord avant l'entrée dans le capteur proprement dit, l'ensemble des particules d'aérosol contenu dans l'échantillon à examiner à l'aide de charges qui sont toutes d'un même signe. Dans l'exemple de la figure 6, ceci est obtenu à l'aide d'une chambre annulaire 52 située à l'entrée 12 du flux d'atmosphère à examiner et contenant une source ionisante 54 assortie d'une grille équipotentielle 56. La source ionisante 54 peut être par exemple une source radioactive alpha et provoquant à l'intérieur de toute la chambre annulaire 52, une création de paires d'ions positifs et négatifs. Selon les valeurs de tension de polarisation choisies pour la source 54 et la grille 56, celle-ci ne laisse sortir à l'extérieur, vers le flux d'air à examiner, que des charges d'un même signe qui viendront se fixer alors sur les particules contenues dans le flux d'air entrant. Si la polarisation du disque 16 est alors de signe opposé à celle de ces mêmes particules, elles seront toutes à coup sûr déposées sur ce disque 16 où l'on pourra ensuite les examiner. Le bon fonctionnement de la structure de la figure 6 requiert par conséquent que les polarités de la grille de polarisation 56 et du disque conducteur 16 soient opposées.

Dans d'autres réalisations non représentées sur les figures ci-jointes, la polarisation de toutes les particules à l'aide de charges d'un même signe avant leur examen par le capteur est réalisée à l'aide de micropointes chargées provoquant l'ionisation par effet couronne, lesdites micropointes étant réparties dans une chambre annulaire identique à la chambre 52 de la figure 6.

Enfin, dans le mode de mise en oeuvre de la figure 7, c'est l'un des disques lui-même, à savoir le disque 16 qui est émetteur d'un rayonnement ionisant.

Dans la structure de la figure 7, il n'existe en général qu'un débit d'aspiration central Q2 par l'intermédiaire de la tubulure 8 et le disque conducteur inférieur 18 est simplement suspendu à la partie inférieure du boîtier 2 par des griffes telles que 58. Dans le dispositif de la figure 7, c'est l'électrode 16, soutenue par la pièce massive 64 qui est portée à la haute tension alors que l'électrode collectrice 18 est à la masse. L'électrode 16 portée à la haute tension est constituée d'un matériau radioactif alpha et une grille de polarisation 60 électriquement isolée se place d'elle-même à l'équipotentielle intermédiaire entre la haute tension de l'électrode 16 et la masse de l'électrode 18. Cette grille 60 a un double rôle en ce sens qu'elle extrait d'une part les ions d'une seule polarité dans la région où circulent les aérosols introduits par la fente latérale annulaire 12 avant leur aspiration par le tube axial et qu'elle établit un champ électrique uniforme dans cette région pour que les aérosols ainsi chargés soient précipités sur le disque de collection 18. Ce disque de collection 18 doit évidemment avoir au moins une face conductrice et peut être réalisé en un matériau métallique quelconque, ou plus simplement ce peut être une tranche de silicium standard si l'on désire faire un examen dans l'ambiance a priori très peu polluée d'une salle propre de l'industrie microélectronique. L'appareil de la figure 7 permet une collection de toutes les particules positives, négatives ou neutres contenues dans une atmosphère à examiner, mais du fait que la loi selon laquelle les particules se chargent à l'intérieur du boîtier 2 sous l'influence de la source alpha composant le disque 16 est incontrôlable, l'appareil ne peut pas fonctionner en spectromètre de mobilité électrique.

On peut noter encore que pour éviter une pénétration possible des aérosols dans la zone où se trouve la source radioactive répartie sur le disque 16, on peut alimenter dans certains cas, cette zone en gaz filtré à faible débit par la tubulure excentrée 62 selon le trajet indiqué par les flèches.

Il convient d'observer que le schéma d'aspiration mis en oeuvre dans le mode de réalisation de la fig. 7, caractérisé par une seule aspiration centrale, et non par une aspiration centrale associée à une injection périphérique, n'est pas lié à l'existence d'une source surfacique d'ionisation, mais peut être transposé à l'ensemble des modes de réalisation de l'invention précédemment décrits.

## EXEMPLE DE REALISATION D'UN AUTRE SELECTEUR DE MOBILITE

Par sélecteur de mobilité ou analyseur différentiel de mobilité, on entend un appareil susceptible de trier les particules d'aérosols contenues dans une phase gazeuse déterminée en fonction de leur mobilité électrique, grandeur bien connue et dont la définition a été rappelée précédemment. De tels appareils existent déjà dans l'industrie et sont utilisés soit pour produire des aérosols de mobilité électrique connue, soit même dans certains cas, des aérosols ayant un diamètre parfaitement déterminé et souvent désignés par les spécialistes sous la terminologie d'aérosols monodispersés (en terminologie anglosaxonne "mono-dispersed").

Dans les réalisations connues jusqu'à ce jour, les sélecteurs de mobilité électrique ont une symétrie cylindrique et les deux électrodes en présence sont constituées respectivement par deux cylindres métalliques conducteurs creux coaxiaux de diamètres différents. Le cylindre central est muni d'une fente circulaire dans laquelle sont aspirées les particules de mobilité électrique déterminée. Cette géométrie présente l'inconvenient de ne pas être suffisamment compacte pour certaines applications que l'on envisage.

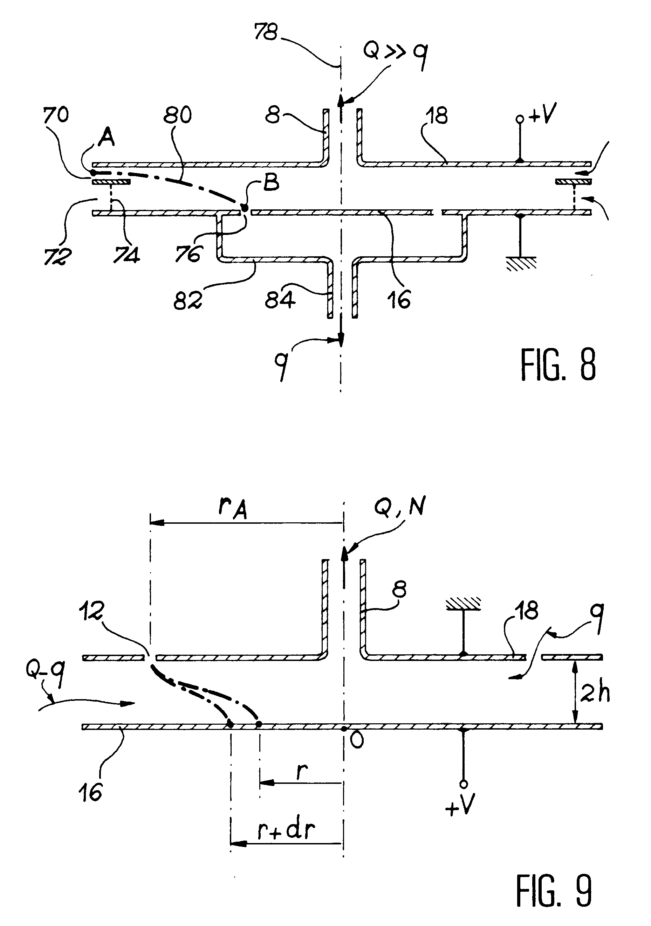

En revanche, en réalisant un sélecteur de mobilité selon le modèle représenté schématiquement figure 8, dans lequel on retrouve le capteur électrostatique avec ses deux disques coaxiaux 16 et 18, et sa tubulure 8 d'extraction, on peut résoudre le problème de façon simple et élégante.

En effet, sur la figure 8 on voit que les bords latéraux du capteur électrostatique précédent comportent deux ouvertures : une ouverture supérieure 70 par laquelle sont aspirés les aérosols à analyser et une ouverture inférieure 72 munie d'un filtre de propreté 74 par laquelle est injecté l'air de balayage extrait par la tubulure 8.

Conformément à l'invention, le disque conducteur inférieur 16 est muni d'une fente annulaire 76 centrée sur l'axe commun 78 des deux disques 16 et 18 et, on aspire par cette fente annulaire 76 les particules dont la trajectoire moyenne entre le point A et le point B est schématisée en pointillé par la ligne 80 sur la figure ; ces particules sont aspirées au travers de la fente 76 en raison du fait que leur lieu normal d'impact en l'absence de cette fente 76 aurait été le point B situé à la distance de l'axe 78 égal au rayon de la fente annulaire 76. Pour réaliser cette aspiration, plusieurs moyens peuvent être utilisés sans sortir du cadre de l'invention ; notamment, et comme c'est le cas dans le mode de réalisation représenté sur la figure 1, on peut utiliser un boîtier cylindrique 82 accolé sous le disque 18 et muni d'une tubulure 84 axiale par exemple, par laquelle on aspire un débit q très inférieur au débit d'extraction primaire Q soutiré par la canalisation 8. De cette façon, on recueille par la tubulure 84 toutes les particules d'aérosols qui ont traversé la fente annulaire 76 et qui ont par définition la même mobilité électrique.

Pour régler cette mobilité électrique à la valeur souhaitable cas par cas, on peut agir sur les deux paramètres que sont le débit Q d'une part et la différence de potentiel V appliquée conformément à l'invention entre les deux disques conducteurs coaxiaux 16 et 18.

## REALISATION D'UN APPAREIL D'OBTENTION D'UN DEPOT SURFACIQUE ETALON

L'exemple qui suit concerne une application du capteur électrostatique à la réalisation d'un appareil d'obtention d'étalon de dépôt surfacique homogéne de particules sur un substrat en forme de disque.

Un certain nombre de développements industriels récents, et notamment la nécessité de réaliser dans de grands volumes de travail des atmosphères de haute pureté vis-à-vis de la contamination par des particules de poussières (salles blanches), rendent de plus en plus nécessaire l'étude des aérosols contenus dans l'atmosphère et par là-même la connaissance aussi exacte que possible du taux de contamination d'une atmosphère déterminée. A cet effet, il est utile de disposer d'étalons de surface, notamment de tranches de silicium (en terminologie anglo-saxonne "wafers") "contaminées" qui sont des étalons en dimension ou en concentration des particules déposées sur un substrat.

On a ainsi déjà réalisé artificiellement des tranches de silicium "contaminées" à l'aide d'aérosols de microsphères de polystyrène en latex monodispersé qui permettent l'étalonnage en dimension de particules des appareils d'analyse de dépôt surfacique.

Les méthodes utilisées pour réaliser de tels dépôts sont actuellement mal connues et ne peuvent par conséquent être employées ou reproduites facilement.

Dans d'autres réalisations, de même nature, on a réalisé des étalons en concentration de particules par gravure de points microscopiques sur un substrat, le nombre de ces points étant parfaitement déterminé et connu par procédé photolithographique. Il est évident que cette technique est délicate à mettre en oeuvre et qu'elle conduit à des étalons relativement coûteux.

Le présent exemple a pour objet un procédé qui permet de réaliser des contaminations surfaciques étalons, à la fois en dimension et en concentration tout en garantissant un dépôt particulièrement homogène. Ce procédé peut de plus être appliqué pour déposer sur des substrats des particules de nature physico-chimique parfaitement maîtrisée pour les besoins de la recherche, notamment en microélectronique.

La demanderesse a effectivement trouvé qu'il était possible d'appliquer le capteur électrostatique de particules d'aérosol objet de l'invention pour obtenir un tel dépôt en constituant simplement l'un des deux disques conducteurs du capteur électrostatique par le substrat sur lequel on veut déposer la contamination étalon.

En se référant à la figure 9 ci-jointe qui montre un capteur électrostatique, on va d'abord expliquer le principe physique qui est à la base de cette application.

Sur cette figure 9 on a représenté le capteur schématiquement par ses deux disques coaxiaux conducteurs 16 et 18 et sa tubulure 8 d'aspiration du débit d'extraction Q. L'entrée des particules d'aérosols que l'on veut déposer sur le disque inférieur 16 est située sur la surface du disque 18 et revêt la forme d'une fente annulaire d'injection 12 au travers de laquelle ces particules sont aspirées. Si le débit gazeux d'aspiration par la fente annulaire 12 est q, il est clair que le débit de gaz d'entraînement nécessaire à la périphérie ouverte des deux disques coaxiaux 16 et 18 est égal à Q-q. Si l'on appelle Z la mobilité électrique des particules, 2h la distance séparant les disques électrodes 16 et 18, rA la distance radiale de la fente annulaire 12 par rapport à l'axe du système et r le rayon d'impact d'une particule donnée, la théorie de l'appareil montre qu'à l'intérieur du capteur sur le disque 16, les particules d'aérosols se déposent sur une circonférence de rayon r défini par la formule suivante :

$$r = \sqrt{r_A^2 - \frac{2\,Qh}{\pi\,ZV}}$$

formule dans laquelle V est la différence de potentiel appliquée entre les électrodes coaxiales circulaires 16 et 18. Dans la formule précédente, si l'on considère que dans un cas particulier donné, les valeurs du débit Q de la tension V sont fixées, on voit donc que c'est uniquement en fonction de leur mobilité électrique Z que les différentes particules constituant l'aérosol pénétrant par la fente annulaire 12 dans le capteur se répartissent selon différents rayons à la surface de l'électrode circulaire 16. Si l'on veut par conséquent déplacer le dépôt des particules du rayon r vers le rayon r+dr il n'y a que deux possibilités qui consistent soit à diminuer le débit d'aspiration Q soit à augmenter la tension V. Comme expérimentalement cette seconde solution est de loin la plus facile et surtout la plus précise, c'est celle que l'on choisit dans le cadre de la présente invention. Par conséquent, c'est en effectuant un balayage de la tension et en la faisant passer de façon continue par diverses valeurs que l'on obtiendra une dispersion du dépôt des particules d'aérosols sur l'électrode circulaire 16 utilisée comme substrat du futur étalon surfacique. Mais bien entendu, cette tension V ne doit pas varier de façon quelconque en fonction du temps si l'on veut réaliser un étalon dont la concentration surfacique soit homogène, c'est-à-dire qui ait toujours en tous points le même nombre de particules par unité de surface. Pour réaliser l'homogénéité d'un tel dépôt, la tension V doit varier dans le temps selon une loi particulière que la demanderesse à déterminée et qui s'exprime par la formule suivante :

$$V = \frac{2b}{Z\left(\dfrac{\pi r_A^2}{Q} - \dfrac{N}{S}t\right)}$$

formule dans laquelle S est la densité surfacique que l'on veut obtenir sur l'électrode 16 de dépôt, t est le temps et N la concentration des particules dans le débit Q d'extraction lorsque V = 0.

Par ailleurs, le résultat précédent ne peut pas être obtenu à partir de n'importe quelle population de particules d'aérosols. En effet, trois grandeurs caractérisent les particules de tout aérosol, à savoir la mobilité électrique, la charge électrique et la dimension de chaque particule. Sans entrer dans le détail de la théorie, qui n'est d'ailleurs pas nécessaire à la compréhension et à la reproductibilité des moyens de l'invention, on indiquera tout de même que ces trois grandeurs sont liées entre elles par une relation qui s'écrit de la façon suivante :

$$Z = \frac{peC}{3\pi\mu d}$$

équation dans laquelle Z est la mobilité électrique d'une particule, e la charge élémentaire, p le nombre de charges élémentaires d'une particule, C est un coefficient et d est le diamètre de chaque particule. Il en résulte par conséquent que l'égalité pour toutes les particules de deux au moins de ces trois grandeurs est suffisante pour qu'à partir de l'aérosol ainsi constitué, on obtienne, en appliquant la loi précédente de variation de la tension V en fonction du temps, un dépôt surfacique homogène.

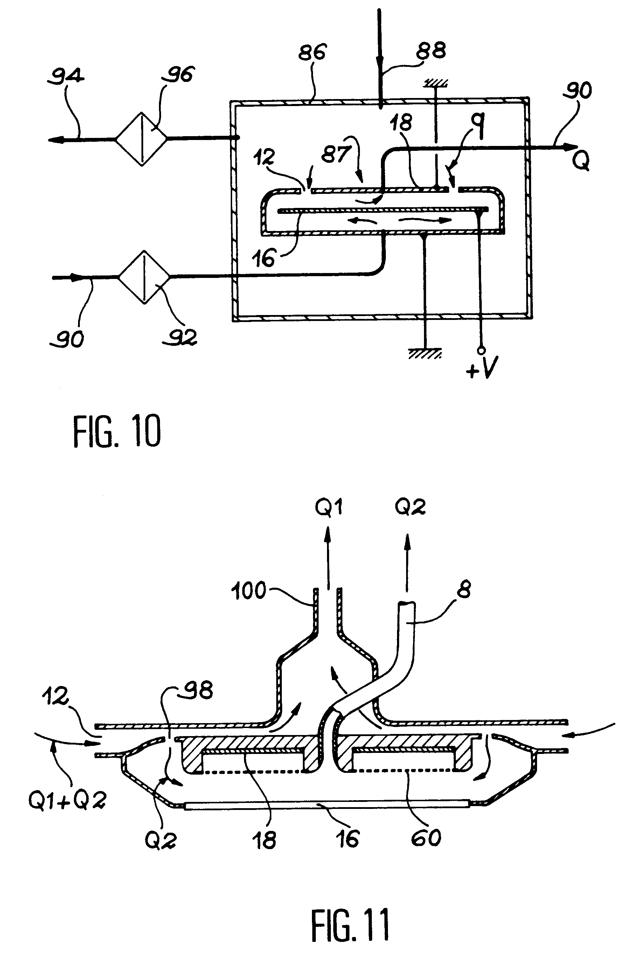

En se référant à la figure 10, on va décrire maintenant le schéma de principe de l'application du capteur électrostatique de particules d'aérosols à la fabrication d'un étalon surfacique de concentration.

Sur cette figure 10, on a représenté le capteur électrostatique 87 muni de ses disques électrodes concentriques 16 et 18 et de sa fente annulaire 12 pour l'accès des aérosols à disperser à l'intérieur du capteur 87, l'ensemble étant situé dans une enceinte fermée 86 alimentée par la canalisation 88 à l'aide d'un flux gazeux contenant les particules d'aérosols. Le débit d'aspiration principal Q du capteur électrostatique 87 circule dans ce dernier et dans l'enceinte 86 grâce à une canalisation 90 ; il est injecté au travers d'un filtre 92 et rejeté à l'extérieur de l'enceinte 86 après avoir rempli sa fonction d'entraînement.

Une canalisation 94 permet d'extraire et d'évacuer vers l'extérieur au travers du filtre 96, l'excès d'atmosphère éventuellement contenue dans l'enceinte 86.

Selon l'invention, les particules d'aérosol qui pénètrent dans l'enceinte 86 par la conduite 88 ont des caractéristiques prédéterminées et notamment la même valeur pour toutes les particules de deux sur trois des grandeurs que sont la mobilité électrique, la charge et la dimension. Dans un cas particulier, mais d'emploi fréquent, l'aérosol est réalisé à l'aide de billes de latex calibrées et l'homme de métier sait alors qu'il est facile, en faisant passer l'aérosol ainsi formé au travers d'un sélecteur différentiel de mobilité, d'obtenir une population de particules d'aérosols qui ont toutes à la fois la même charge électrique, la même dimension et la même mobilité électrique. Ce cas particulièrement facile à mettre en oeuvre permet notamment d'alimenter la conduite 88 à l'entrée de l'enceinte 86.

Quoi qu'il en soit, en respectant les conditions de nature particulière de l'aérosol injecté et de variation de la différence de potentiel V entre les deux disques 16 et 18 en fonction du temps, on obtient sur l'électrode 16, utilisée comme substrat de dépôt, une contamination surfacique homogène ayant une valeur S (en nombre de particules par unité de surface) choisie à l'avance.

EXEMPLE DE REALISATION D'UN CAPTEUR A SELECTION TOTALE DES PARTICULES DE GRANULOMETRIE INFERIEURE A UN SEUIL DONNE

Cet exemple est relatif à l'application du capteur électrostatique à la réalisation d'un appareil qui permet de capter tous les aérosols ayant une granulométrie inférieure à un seuil donné. Un tel appareil possède un grand nombre d'applications possibles, l'une des principales étant l'étude dans une atmosphère comportant des aérosols dispersés en granulométrie de ceux qui sont normalement inhalés par les voies respiratoires de l'homme, puisque l'on admet généralement que les particules inspirables par l'homme et susceptibles de franchir le larynx sont celles qui ont une granulométrie inférieure à 10 micromètres. Cet appareil permet donc de collecter dans une atmosphère quelconque la totalité des poussières qu'un être humain, présent dans cette atmosphère, aurait inhalées.

L'appareil de sélection totale, objet de la présente application combine le principe de la sélection granulométrique par séparation inertielle avec un capteur électrostatique de collection totale tel qu'il a été défini en se référant à la figure 7.

Sur la figure 11 qui montre schématiquement la réalisation du capteur à sélection totale, on reconnaît le capteur proprement dit tel qu'il était décrit sur la figure 7 avec ses électrodes 16 et 18 dont l'électrode 16 est un émetteur ionisant, sa grille équipotentielle 60 et sa tubulure centrale d'aspiration 8 par laquelle est évacué le débit $Q_2$. Conformément à la présente invention, on a combiné avec cette structure une structure de sélection granulométrique par séparation inertielle qui se compose essentiellement, dans le courant gazeux pénétrant à la périphérie 12 de l'appareil sous un débit $Q_1+Q_2$ d'une fente annulaire 98 d'une largeur de l'ordre du millimètre par laquelle est aspiré dans l'espace compris entre les électrodes coaxiales 16 et 18 le débit d'atmosphère $Q_2$. La fraction restante $Q_1$ du débit d'entrée en 12 dans l'appareil qui ne pénètre pas dans le capteur électrostatique est évacuée directement par une autre tubulure centrale 100.

Conformément à l'invention, la fente 98 en combinaison avec le débit d'aspiration $Q_2$ qui la traverse constitue un séparateur inertiel de sélection granulomètrique et c'est par le choix convenable et selon des modalités connues de l'homme de métier que l'on réalise la coupure à une granulométrie voulue des particules d'aérosols pénétrant dans le capteur en choisissant la dimension de la fente annulaire et le débit $Q_2$ qui la traverse.

Dans un exemple fréquent de mise en oeuvre de la présente application, on choisit précisément les dimensions de la fente annulaire 98 et la valeur du débit $Q_2$ pour obtenir une coupure des particules au diamètre aérodynamique de 10 micromètres, ce qui réalise, par des moyens physiques, la sélection granulométrique qui aurait eu lieu dans le larynx d'un être humain. De cette façon, toutes les particules qu'aurait inhalées cet être humain pénètrent par la fente 98 et sont ensuite absorbées et fixées sur la plaque de collection 18 du capteur électrostatique à sélection totale dans le but d'une analyse ultérieure.

## Revendications

1. Capteur électrostatique de particules d'aérosol contenues dans une atmosphère à examiner, caractérisé en ce qu'il comprend deux disques conducteurs coaxiaux (16, 18), espacés et parallèles, entre lesquels on établit un champ électrique en les portant à des potentiels différents, l'espace compris entre les deux disques communiquant sur toute sa périphérie avec l'atmosphère à examiner, une aspiration centrale (8) étant prévue dans cet espace pour y faire circuler, à partir de la périphérie des disques, une partie de cette atmosphère sous forme d'un écoulement laminaire centripète et stable.

2. Capteur électrostatique selon la revendication 1, caractérisé en ce que le débit Q1 de l'écoulement de l'atmosphère à examiner est la résultante différentielle du débit d'aspiration centrale Q2 et d'un débit d'injection périphérique $Q_o$ de gaz filtré, ce dernier étant réglé à une valeur inférieure à celui du débit d'aspiration.

3. Capteur électrostatique selon la revendication 2, caractérisé en ce qu'il est constitué d'un boîtier cylindrique circulaire (2) de forme aplatie possédant deux conduits axiaux, l'un d'injection de gaz (4) à la partie inférieure du boîtier et l'autre d'extraction de gaz (8), à la partie supérieure de ce boîtier, ce boîtier comportant à sa périphérie supérieure une fente annulaire (12) pour l'entrée de l'atmosphère à analyser et, en son centre, un disque épais massif (14) dont la face supérieure supporte l'un des deux disques conducteurs (16), le second disque conducteur (18) étant constitué par le couvercle supérieur du boîtier, le débit de gaz d'injection contournant le disque épais après passage au travers d'un filtre de purification (20) et de répartition uniforme de son écoulement.

4. Capteur électrostatique selon la revendication 3, caractérisé en ce qu'il comprend à l'entrée de la fente annulaire (12) et disposés dans le boîtier, un certain nombre d'électrodes périphériques sectorielles (40, 42, 44...) munies chacune d'une alimentation électrique pour les porter à un potentiel suffisant pour piéger toutes les particules entrant dans le secteur correspondant et permettre par conséquent un fonctionnement du capteur par secteurs séquentiels.

5. Capteur électrostatique selon la revendication 2 destiné à la collection des particules d'aérosol des deux signes, caractérisé en ce qu'il est constitué d'un boîtier cylindrique circulaire (26) possédant selon son plan diamétral de symétrie une ouverture périphérique annulaire (12) pour l'aspiration du débit d'atmosphère à examiner et, selon son axe de symétrie circulaire, à la partie supérieure comme à la partie inférieure, chaque fois deux conduits concentriques (28,30) destinés chacun respectivement, pour le conduit central (30) au débit d'aspiration et pour le conduit externe (28) au débit d'injection, les deux disques conducteurs (16,18) étant placés symétriquement face à face de part et d'autre du plan diamétral de symétrie et portés à des potentiels symétriques par rapport à la masse et de signes opposés, chaque conduit central d'aspiration débouchant dans l'espace compris entre les deux disques par un orifice (40,42) percé au centre de chacun d'entre eux.

6. Application du capteur électrostatique selon l'une des revendications 1 à 5 à la réalisation d'un spectromètre de mobilité électrique de particules d'aérosols, caractérisé en ce que l'on choisit l'intensité du champ électrique entre les deux disques et le débit d'écoulement laminaire radial de l'échantillon d'atmosphère à examiner pour obtenir la fixation dispersée sous forme de zones annulaires concentriques sur les disques d'une partie au moins de ces particules, le spectre de mobilité étant déduit par un calcul ou par un traitement informatique à partir de l'examen de l'emplacement et de la densité des zones précédentes, et de la granulométrie des particules.

7. Application du capteur électrostatique selon l'une des revendications 1 à 5 à la réalisation d'un collecteur des particules d'aérosol contenues dans une atmosphère à examiner, caractérisée en ce que la partie de cette atmosphère pénétrant dans le capteur est soumise à des moyens de charge électrique d'un même signe de toutes les particules constituant l'aérosol.

8. Application du capteur électrostatique selon la revendication 7, caractérisée en ce que ces moyens de charge électrique sont situés à l'entrée du débit gazeux entre les deux disques et sont constitués d'une chambre annulaire (52) contenant une source radioactive ionisante (54) et une grille de polarisation (56) chargeant les particules d'un même signe avant leur pénétration dans le capteur.

9. Application du capteur électrostatique selon la revendication 7, caractérisée en ce que les moyens de charge électrique des particules sont situés à l'entrée du débit gazeux entre les deux disques et sont constitués d'une chambre annulaire munie de micropointes alimentées en haute tension provoquant l'ionisation par effet couronne.

10. Application du capteur électrostatique selon la revendication 7, caractérisée en ce que les moyens de charge électrique des particules sont constitués par l'un des deux disques lui-même (16) émetteur d'un rayonnement ionisant.

11. Application du capteur électrostatique selon l'une au moins des revendications précédentes, caractérisée en ce que le conduit d'extraction de gaz est équipé d'un filtre statique (36) pour la collection des particules d'aérosol neutres éventuellement contenues dans l'atmosphère à examiner.

12. Application du capteur électrostatique selon la revendication 1 à la réalisation d'un sélecteur de mobilité électrique des particules d'un aérosol, caractérisée en ce que l'un au moins des deux disques conducteurs coaxiaux (16, 18) est muni d'une fente annulaire (76) centrée sur l'axe commun aux deux disques en liaison avec des moyens d'aspiration (84), au travers de cette fente, des particules qui se seraient normalement déposées sur le disque à l'endroit de cette fente si elle n'existait pas.

13. Application du capteur électrostatique selon la revendication 12, caractérisée en ce que les moyens d'aspiration consistent en un boîtier cylindrique (82), accolé sous le disque (16), renfermant la fente (76), et muni d'une tubulure d'aspiration (84) pour permettre l'extraction sélective des particules ayant la mobilité électrique correspondant au rayon de la fente (76).

14. Application du capteur électrostatique selon la revendication 1 à la réalisation d'un appareil d'obtention d'étalons de dépôts surfaciques homogènes de particules sur un substrat en forme de disque, caractérisée en ce qu'on alimente le capteur électrostatique dont le substrat constitue l'un des disques conducteurs, à l'aide d'un flux d'aérosol de particules ayant toutes en commun la même valeur pour deux sur trois des grandeurs que sont la mobilité électrique, la charge et la dimension, et en ce qu'on fait varier la différence de potentiel V entre les disques du capteur en fonction du temps pendant le dépôt selon la loi :

$$V = \frac{2h}{Z \left( \dfrac{\pi r_A^2}{Q} - \dfrac{I}{S} t \right)}$$

formule dans laquelle :
- h est la demi-distance entre les plaques ;
- Z est la mobilité électrique commune aux particules ;

- rA est la distance du point d'injection de l'aérosol par rapport à l'axe du capteur ;
- Q est le débit d'extraction de la phase gazeuse hors du capteur ;
- N est la concentration des particules dans le débit d'extraction Q, lorsque V = 0 ;
- S est la densité surfacique des particules que l'on souhaite obtenir sur le disque de collection ;
- t est le temps.

15. Application au capteur électrostatique à collection totale selon la revendication 10 à la réalisation d'un capteur à sélection totale de tous les aérosols ayant une granulométrie inférieure à un seuil donné, caractérisée en ce que ce capteur comporte sur le trajet d'introduction de la phase gazeuse contenant les aérosols une fente annulaire calibrée (98) pour réaliser, pour un débit d'extraction approprié la séparation inertielle des particules de granulométrie inférieure au seuil choisi.

**Claims**

1. Electrostatic detector for aerosol particles contained in an atmosphere to be examined, characterized in that it comprises two parallel, spaced, coaxial conductive disks (16, 18) between which is established an electric field raising them to different potentials, the space between the two disks communicating over its entire periphery with the atmosphere to be examined, a central suction tube (8) being provided in said space in order to bring about the circulation therein, from the periphery of the disks, of part of said atmosphere in the form of a stable, centripetal, laminar flow.

2. Electrostatic detector according to claim 1, characterized in that the atmospheric flow rate Q1 to be examined is the differential resultant of the central suction flow rate Q2 and a peripheral injection flow rate $Q_o$ of filtered gas, the latter being regulated to a value below that of the suction flow.

3. Electrostatic detector according to claim 2, characterized in that it is constituted by a flattened circular cylindrical case (2) having two axial pipes, one for injecting a gas (4) into the lower part of the case and the other for extracting the gas (8) in the upper part of said case, the latter being provided on its upper periphery with an annular slot (12) for the entry of the atmosphere to be analyzed and, in its centre, a solid thick disk (14), whose upper face supports one of the two conductive disks (16), the second conductive disk (18) being constituted by the upper cover of the case, the injection gas flow passing round the thick disk after passing through a filter (20) for the purification and uniform distribution of its flow.

4. Electrostatic detector according to claim 3, characterized in that it comprises at the entrance of the annular slot 12 and located in the box, a certain number of sector-like, peripheral electrodes (40, 42, 44, etc), each being provided with an electric power supply for raising them to an adequate potential for trapping all the particles entering the corresponding sector and consequently permitting an operation of the detector by sequential sectors.

5. Electrostatic detector according to claim 2, for collecting aerosol particles having two signs, characterized in that it is constituted by a circular, cylindrical case (26) which, in its diametral plane of symmetry, has an annular, peripheral opening (12) for the suction of the atmospheric flow rate to be examined and, along its circular axis of symmetry and in both the upper and lower parts, on each occasion two concentric pipes (28, 30), the central pipe (30) being used for the suction flow and the outer pipe (28) for the injection flow, the two conductive disks (16, 18) being positioned symmetrically facing on either side of the diametral plane of symmetry and are raised to symmetrical potentials with respect to earth or ground and of opposite signs, each central suction pipe issuing into the space between the two disks by an orifice (40, 42) made in the centre of each of them.

6. Electrostatic detector according to any one of the claims 1 to 5 for producing an aerosol particle electric mobility spectrometer, characterized in that the intensity of the electric field between the two disks and the radial, laminar flow rate of the atmospheric sample to be examined are chosen so as to obtain fixing dispersed in the form of concentric, annular zones over the disks of at least part of the said particles, the mobility spectrum being deduced by a calculation or by data processing on the basis of the examination of the location and the density of the preceding zones and the grain size of the particles.

7. Electrostatic detector according to any one of the claims 1 to 5 for producing a collector of the aerosol particles contained in an atmosphere to be examined, characterized in that the part of said atmosphere entering the detector is subject to electric means with the same sign for all the particles constituting the aerosol.

8. Application of the electrostatic detector according to claim 7, characterized in that said electric charging means are located at the entry of the gaseous flow between the two disks and are constituted by an annular chamber (52) containing an ionizing radioactive source (54) and a polarization grid (56) charging the particles with the same sign prior to their entry into the detector.

9. Application of the electrostatic detector according to claim 7, characterized in that the electric charging means for the particles are located at the entry of the gaseous flow between the two disks and are constituted by an annular chamber provided with microdots supplied with high voltage and bringing about ionization by the corona effect.

10. Application of the electrostatic detector according to claim 7, characterized in that the electric charging means for the particles are constituted by one of the two disks (16), which emits ionizing radiation.

11. Application of the electrostatic detector according to at least one of the preceding claims, characterized in that the gas extraction pipe is equipped with a static filter (36) for collecting the neutral aerosol particles possibly contained in the atmosphere to be examined.

12. Application of the electrostatic detector according to claim 1 for producing an electric mobility selector for the particles of an aerosol, characterized in that at least one of the two coaxial, conductive disks (16, 10) is provided with an annular slot (76) centred on the axis common to the two disks in conjunction with means (84) for sucking through said slot particles which would be normally deposited on the disk at the location of said slot if it did not exist.

13. Application of the electrostatic detector according to claim 12, characterized in that the suction means are constituted by a cylindrical case (82), which is connected beneath the disk (16) containing the slot (76) and provided with a suction tube (84) for permitting the selective extraction of particles having the electric mobility corresponding to the radius of the slot (76).

14. Application of the electrostatic detector according to claim 1 for producing an apparatus for obtaining homogeneous surface deposit standards for particles on a disk-like substrate, characterized in that the electrostatic detector, whose substrate constitutes one of the conductive disks, is supplied by an aerosol particle flow having in common the same value for two out of the three quantities constituted by the electric mobility, the charge and the size and in that the potential difference V between the disks of the detector is varied as a function of time during the deposit and in accordance with the law:

$$V = \frac{2h}{Z \dfrac{\pi r_A^2}{Q} - \dfrac{N}{S} t}$$

in which

h    is the half-distance between the plates,
Z    is the electric mobility common to the particles,
rA   is the distance from the aerosol injection point to the detector axis,
Q    is the extraction flow rate of the gaseous phase from the detector,
N    is the concentration of particles in the extraction flow rate Q, when V = 0,
S    is the surface density of the particles which it is wished to obtain on the collecting disk,
t    is time.

15. Application of the electrostatic detector with total collection in accordance with claim 10 for producing a total selection detector of all the aerosols having a grain size below a given threshold, characterized in that on the introduction path of the gaseous phase containing the aerosols, said detector has a calibrated annular slot (98) for bringing about, for an appropriate extraction flow, the inertial separation of the particles having a grain size below the selected threshold.

**Patentansprüche**

1. Elektrostatischer Detektor für in einer zu untersuchenden Atmosphäre enthaltene Aerosole, dadurch **gekennzeichnet,** daß er zwei voneineander beabstandete und paralelle koaxiale Leiterscheiben (16, 18) umfaßt, zwischen denen ein elektrisches Feld aufgebaut wird, indem sie an verschiedene Potentiale gelegt werden, wobei der Zwischenraum zwischen den beiden Scheiben an seinem gesamten Umfang mit der zu untersuchenden Atmosphäre in Verbindung steht, wobei eine zentrale Absaugvorrichtung (8) in diesem Raum vorgesehen ist, um darin, ausgehend vom Scheibenumfang, einen Teil dieser Atmosphäre als laminare, zentripetale und stationäre Strömung fließen zu lassen.

2. Elektrostatischer Detektor nach Anspruch 2, dadurch gekennzeichnet, daß der Strömungsdurchfluß Q1 der zu untersuchenden Atmosphäre die Differenz zwischen dem zentralen Absaugfluß Q2 und einem Fluß $Q_o$ von gefiltertem Gas ist, das über den Umfang eingeleitet wird, wobei letzterer auf einen Wert eingestellt wird, der unter dem des Absaugflusses liegt.

3.  Elektrostatischer Detektor nach Anspruch 1, dadurch gekennzeichnet, daß er aus einem flachen, kreisförmigen, zylindrischen Gehäuse (2) gebildet ist, das zwei axiale Leitungen besitzt, die eine zum Gaseinleiten (4) am Unterteil des Gehäuses und die andere zum Gasausleiten (8) am Oberteil des Gehäuses, wobei dieses Gehäuse an seinem oberen Umfang einen ringförmigen Spalt (12) zum Eintritt der zu analysierenden Atmosphäre und in seiner Mitte eine dicke, massive Scheibe (14) umfaßt, deren Oberseite die eine der beiden Leiterscheiben (16) trägt, wobei die zweite Leiterscheibe (18) vom oberen Deckel des Gehäuses gebildet ist, und der Einleit-Gasfluß die dicke Scheibe umgibt, nachdem er einen Filter (20) zur Reinigung und gleichmäßigen Strömungsverteilung duchlaufen hat.

4.  Elektrostatischer Detektor nach Anspruch 3, dadurch gekennzeichnet, daß er am Eingang des ringförmigen Spalts (12) und im Gehäuse angeordnet eine bestimmte Anzahl von Elektroden (40, 42, 44, ...) umfaßt, jede mit einer elektrischen Versorgung ausgestattet, um sie auf ein Potential zu bringen, das ausreicht, um die in den entsprechenden Sektor eintretenden Teilchen einzufangen und folglich eine Arbeitsweise des Detektors in sequentiellen Sektoren zu ermöglichen.

5.  Elektrostatischer Detektor nach Anspruch 2, dienend zum Sammeln von Aerosolteilchen beider Ladungsvorzeichen, dadurch gekennzeichnet, daß er aus einem kreisförmigen, zylindrischen Gehäuse (26) gebildet ist, das in seiner diametralen Symmetrieebene eine ringförmige Außenöffnug (12) zum Ansaugen des Flusses zu untersuchenden Gases und entlang seiner Kreissymmetrieachse am Oberteil wie am Unterteil je zwei konzentrische Leitungen (28, 30) besitzt, die jeweils in der Mittelleitung (30) für den Absaugfluß und in der äußeren Leitung (28) für den Einleitfluß dienen, wobei die beiden Leiterscheiben (16, 18) symmetrisch, sich gegenüberliegend auf beiden Seiten der diametralen Symmetrieebene angeordnet und an zur Masse symmetrische Potentiale von entgegengesetzten Vorzeichen gelegt sind, wobei sich jede Mittel-Absaugleitung in den Zwischenraum zwischen den beiden Scheiben durch eine Öffnung (40, 42) öffnet, die in der Mitte jeder Scheibe ausgebildet ist.

6.  Anwendung des elektrostatischen Detektors nach einem der Ansprüche 1 bis 5 zum Ausführen eines Spektrometers für Aerosolteilchen aufgrund ihrer elektrischen Beweglichkeit, dadurch gekennzeichnet, daß die elektrische Feldstärke zwischen den beiden Scheiben und der laminare, radiale Strömungsfluß der zu untersuchenden Atmosphärenprobe so gewählt werden, daß erreicht wird, daß sich mindestens ein Teil dieser Teilchen in ringförmigen, konzentrischen Zonen auf den Scheiben verteilt anlagert, wobei das Beweglichkeitsspektrum durch Berechnung oder informatische Verarbeitung erschlossen wird, ausgehend vom Überprüfen der Zonenlage und -dichte, sowie der Teilchenkörnung.

7.  Anwendung des elektrostatischen Detektors nach einem der Ansprüche 1 bis 5 zum Ausführen eines Kollektors von Aerosolteilchen, die in einer zu untersuchenden Atmosphäre enthalten sind, dadurch gekennzeichnet, daß der in den Detektor einströmende Teil der zu untersuchenden Atmosphäre Mitteln ausgesetzt wird zum elektrischen Laden mit gleichem Vorzeichen aller Teilchen, die das Aerosol bilden.

8.  Anwendung des elektrostatischen Detektors nach Anspruch 7, dadurch gekennzeichnet, daß die Mittel zur elektrischen Ladung am Eingang des Gasflusses zwischen den beiden Scheiben gelegen sind und aus einer ringförmigen Kammer (52) gebildet sind, umfassend eine ionisierende, radioaktive Quelle (54) und ein Polarisationsgitter (56), die die Teilchen mit gleichem Vorzeichen laden, bevor sie in den Detektor eintreten.

9.  Anwendung des elektrostatischen Detektors nach Anspruch 7, dadurch gekennzeichnet, daß die Mittel zum elektrischen Laden der Teilchen am Eingang des Gasflusses zwischen den beiden Scheiben gelegen sind und aus einer ringförmigen Kammer gebildet sind, die mit Mikrospitzen versehen ist, die an Hochspannung gelegt sind und durch den Koronaeffekt die Ionisation hervorrufen.

10.  Anwendung des elektrostatischen Detektors nach Anspruch 7, dadurch gekennzeichnet, daß die Mittel zum elektrischen Laden der Teilchen dadurch gebildet sind, daß eine der beiden Scheiben (16) selbst, eine ionisierende Strahlung emittiert.

11.  Anwendung des elektrostatischen Detektors nach mindestens einem der vorigen Ansprüche, dadurch gekennzeichnet, daß die Leitung zum Gasausleiten mit einem statischen Filter (36) ausgerüstet ist, um in der zu untersuchenden At

mosphäre eventuell enthaltene neutrale Aerosol-teilchen zu sammeln.

12. Anwendung des elektrostatischen Detektors nach Anspruch 1 zum Ausführen eines Selektors für Aerosolteilchen aufgrund ihrer elektrischen Beweglichkeit, dadurch gekennzeichnet, daß mindestens die eine der beiden koaxialen Leiterscheiben (16, 18) mit einem ringförmigen Spalt (76) versehen ist, der auf der gemeinsamen Achse der beiden Scheiben zentriert ist in Verbindung mit Mitteln (84) zum Absaugen von Teilchen über diesen Spalt, die sich normalerweise auf der Scheibe an der Stelle dieses Spalts abgelegt hätten, wenn der Spalt nicht existierte.

13. Anwendung des elektrostatischen Detektors nach Anspruch 12, dadurch gekennzeichnet, daß die Absaugmittel ein zylindrisches Gehäuse (82) umfassen, das unter der Scheibe (16) befestigt ist, den Spalt (76) einschließt und mit einem Absaug-Rohransatz (84) versehen ist, um das selektive Ausleiten von Teilchen zu ermöglichen, die die dem Radius des Spalts (76) entsprechende elektrische Beweglichkeit haben.

14. Anwendung des elektrostatischen Detektors nach Anspruch 1 zum Ausführen eines Geräts, das homogene Probe-Oberflächenablagerungen von Teilchen auf einem scheibenförmigen Substrat erzeugt, dadurch gekennzeichnet, daß dem elektrostatischen Detektor, dessen Substrat die eine der Leiterscheiben bildet, mittels eines Aerosolflusses Teilchen zugeführt werden, die denselben Wert zweier von drei Größen, nämlich elektrische Beweglichkeit, Ladung und Ausdehnung, gemeinsam haben, und dadurch, daß während der Ablagerung die Potentialdifferenz V zwischen den Detektorscheiben als Funktion der Zeit nach dem Gesetz:

$$V = \frac{2h}{2\left(\dfrac{\pi r_A^2}{Q} - \dfrac{N}{S}t\right)}$$

variiert wird, wobei in der Formel:
- h der Halbabstand zwischen den Platten ist;
- Z die den Teilchen gemeinsame elektrische Beweglichkeit ist;
- rA der Abstand des Aerosol-Einleitpunktes bezüglich der Detektorachse ist;
- Q der Ausleitfluß der Gasphase aus dem Detektor ist;
- N die Teilchenkonzentration im Ausleitfluß Q ist, wenn V = 0;
- S die Oberflächen-Teilchendichte ist, die auf der Kollektorscheibe erreicht werden soll;
- t die Zeit ist.

15. Anwendung des vollständig sammelnden elektrostatischen Detektors nach Anspruch 10 zum Ausführen eines Detektors mit vollständiger Selektion aller Aerosole, die eine Körnung unter einer gegebenen Schwelle haben, dadurch gekennzeichnet, daß dieser Detektor auf dem Einleitweg der Gasphase, die die Aerosole umfaßt, einen ringförmigen, kalibrierten Spalt (98) umfaßt, um für einen geeigneten Ausleitfluß die Ablenkungsfilterung von Teilchen mit einer Körnung unter der gewählten Schwelle zu erreichen.

$$Q2 = Q1 + Q0$$

FIG. 1

FIG. 2

FIG. 3

FIG. 4

FIG. 5

EP 0 404 681 B1

$$Q2 = Q1 + Q0$$

FIG. 6

FIG. 7

EP 0 404 681 B1

FIG. 8

FIG. 9

20

FIG. 10

FIG. 11